Europäisches Patentamt

European Patent Office

Office européen des brevets

(19)

(11) Veröffentlichungsnummer : **0 065 648**
**B1**

(12)

# EUROPÄISCHE PATENTSCHRIFT

(45) Veröffentlichungstag der Patentschrift :
28.08.85

(21) Anmeldenummer : 82103390.9

(22) Anmeldetag : 22.04.82

(51) Int. Cl.⁴ : **H 04 K   1/04**

(54) **Verfahren zur Frequenzvertauschung von Teilbändern.**

(30) Priorität : 22.05.81 DE 3120445

(43) Veröffentlichungstag der Anmeldung :
01.12.82 Patentblatt 82/48

(45) Bekanntmachung des Hinweises auf die Patenterteilung : 28.08.85 Patentblatt 85/35

(84) Benannte Vertragsstaaten :
BE CH DE FR GB IT LI LU NL SE

(56) Entgegenhaltungen :
DE-A- 2 652 607
LU-A-   67 901
IEEE   TRANSACTIONS   ON   COMMUNICATIONS,
BAND COM 27, Nr. 1, JANUAR 1979, Seiten 221 bis
228

(73) Patentinhaber : **ANT Nachrichtentechnik GmbH**
**Gerberstrasse 33**
**D-7150 Backnang (DE)**

(72) Erfinder : **Göckler, Heinz, Dipl.-Ing.**
**Elbinger Strasse 52**
**D-7150 Backnang (DE)**

(74) Vertreter : **Schickle, Gerhard, Dipl.-Ing. et al**
**ANT Nachrichtentechnik GmbH Patent- und Lizen-**
**zabteilung Gerberstrasse 33**
**D-7150 Backnang (DE)**

# 0 065 648

**Beschreibung**

Die Erfindung betrifft ein zeitdiskretes Verfahren zur Frequenzumsetzung und -vertauschung von n gleichbreiten Teilbändern eines Signalfrequenzbandes nach der Weaver-Methode gemäß Oberbegriff des Patentanspruchs 1.

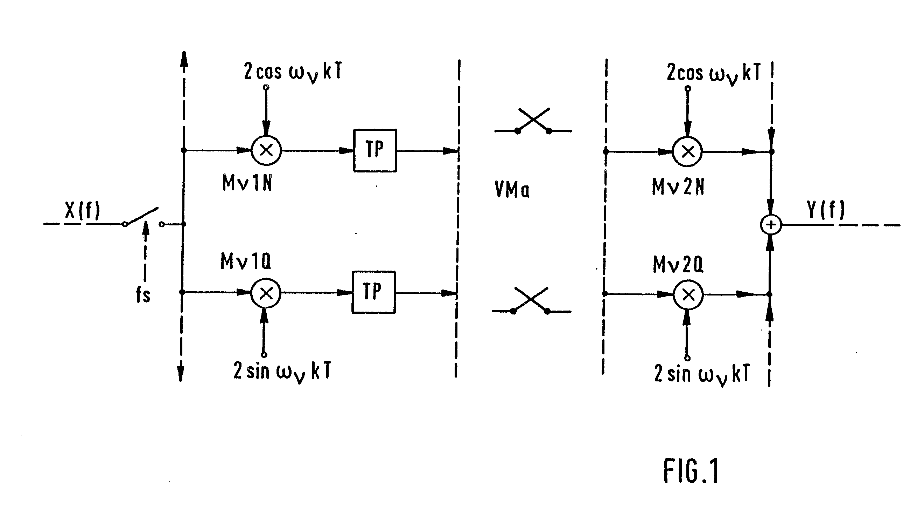

Bei der Weaver-Methode, erstmals beschrieben in Proc. IRE, Dez. 1956, S. 1703 bis 1705, werden anstelle der bei üblicher Teilbandvertauschung verwendeten reellen Trägerschwingungen $\cos\omega\nu kT$ zur Umsetzung der Teilbänder komplexe Trägerschwingungen $e^{j\omega\nu^{kT}}$ benutzt, wobei die einzelnen Trägerfrequenzen so gewählt sind, daß die Filterung aller Teilbänder mittels gleicher Tiefpässe erfolgt. Dieses Verfahren zur Erzeugung von Einseitenbandsignalen ist vor allem für eine digitale Realisierung geeignet, da hierbei die Modulation auf der Kompensation gegenphasiger Spektralanteile im Nutzband basiert, weshalb von den beiden Zweigtiefpässen TP (Fig. 1) eine gute Übereinstimmung der Durchlaßcharakteristik gefordet werden muß. Zur Verbesserung der Unterdrükkung störender Inbandspektren ist jedoch eine gute Übereinstimmung der Übertragungseigenschaften der beiden ganzen Zweige, also auch der Modulatoren, der Amplitude, der Phase und der Orthogonalität der Trägerschwingungen erforderlich.

Aufgabe der vorliegenden Erfindung ist es deshalb, ein zeitdiskretes Verfahren der obigen Art anzugeben, das in unaufwendiger Weise eine gute Übereinstimmung der Übertragungseigenschaften der orthogonalen Zweige ergibt, so daß störende Inbandspektren eliminiert oder stark unterdrückt werden.

Die Lösung erfolgt mit den im Patentanspruch 1 angegebenen Verfahrensschritten.

Durch die erfindungsgemäße Lösung läßt sich die Hälfte der Multiplizierer in den Weaver-Modulatoren sowie die Hälfte der Tiefpässe bzw. Filter gegenüber dem üblichen Weaver-Verfahren einsparen. Ein weiterer Vorteil liegt darin, daß die Weaver-Modulatoren (Multiplizierer und Filter) in gleicher Ausführung realisiert werden können oder daß in weiterer Multiplexuasnutzung nur ein einziger Weaver-Modulator erforderlich ist. Durch die Multiplexbildung wird eine sehr hohe Kompensation störender Inbandspektren erreicht, was zu einer Verbesserung des Signal-Störabstandes des umgesetzten Signals führt.

Das angegebene Verfahren läßt sich vorteilhaft bei der Einseitenband-Modulation bzw. zur Sprachverschleierung einsetzen.

Der Multiplexbetrieb ist an sich zwar bei der zeitdiskreten Signalverarbeitung bekannt, beispielsweise durch den Aufsatz von Gersho in Proceedings of the IEEE, Vol. 67, N° 2 vom Februar 1979, Seite 196 bis 218.

Eine Möglichkeit zur Multiplexbildung von Multiplizierern in Weaver-Modulatoren, wobei den Multiplizierern abwechselnd verschiedene Trägerfrequenzen zugeführt werden, wurde durch Kurth in IEEE Transactions on Communication Technology Vol. COM-19, N° 1, Febr. 1971, pp. 63 bis 71 bekannt.

In dem Aufsatz von Gazsi in IEEE Transactions on Communications VOL COM 27 N° 1, Jan. 1979 Seiten 221 bis 228, wurden Möglichkeiten für die einfache Realisierung digitaler Modulatoren aufgezeigt, wenn das Verhältnis der Trägerfrequenz zur Abtastfrequenz ein Quotient einfacher ganzer Zahlen ist.

Es folgt nun die Beschreibung der Erfindung anhand der Figuren.

Die Figur 1 stellt eine Schaltungsanordnung bzw. zwei orthogonale Zweige für das $\nu$-te Teilband einer n-Teilband Vertauschung nach der üblichen Weaver-Methode dar.

Die Figur 2 zeigt die erfindungsgemäße Anordnung für zwei orthogonale Zweige und

die Figur 3 eine Multiplizierrerrealisierung für einen Weaver-Modulator in zeitdiskreter Verarbeitung.

Aus Fig. 1 ist erkennbar, wie das Eingangssignal mit dem Spektrum X(f) mit der Abtastrate fs abgetastet wird und anschließend den Multiplizierern M$\nu$ zugeführt wird. Gezeichnet sind von den n-Teilbanddoppelzweigen ein zueinander orthogonales Zweigpaar für das Teilband $\nu$. In den ersten Multiplizierern M$\nu$1N und M$\nu$1Q (N steht für Normal- und Q für Quadraturkomponente), die mit den Trägerschwingungen 2 $\cos\omega\nu kT$ bzw. 2 $\sin\omega\nu kT$ versorgt werden, ist jeweils ein Filter TP nachgeschaltet, dessen Ausgang auf einen der Eingänge der Verwürfelungsmatrix VMa geschaltet ist. Die Ausgänge dieser Verwürfelungsmatrix führen wiederum auf die zweiten Multiplizierer, von denen diejenigen für das $\nu$. Teilband M$\nu$2N bzw. M$\nu$2Q gezeichnet sind, deren Ausgänge durch ein Summierglied zum Ausgangssignal mit dem Spektrum Y(f) zusammengefaßt werden.

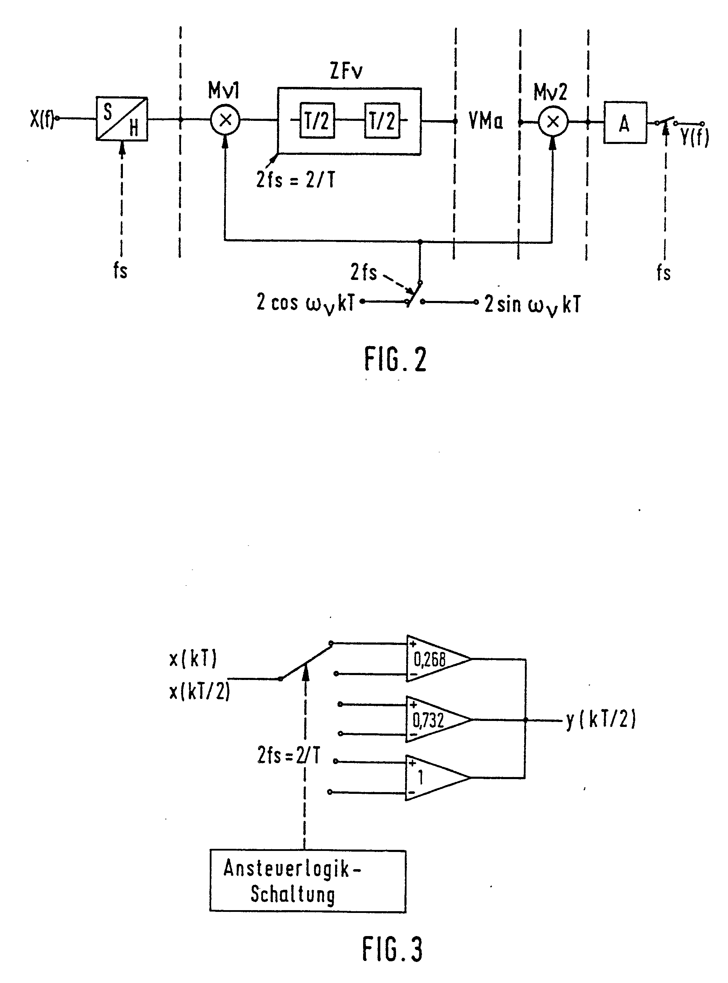

Aus Fig. 2 ist ersichtlich, wie das Eingangssignal mit dem Spektrum X(f) einem Abtasthalteglied S/H zugeführt wird, das mit der Abtastrate fs abgetastet wird, dessen Ausgang auf nunmehr nur noch einen Multiplizierer M$\nu$1 für das Teilband $\nu$ geführt ist.

Dieser erste Multiplizierer M$\nu$1 wird ebenso wie ein nachgeschalteter zweiter Multiplizierer M$\nu$2 mittels synchronem Schalter mit der doppelten Abtastrate 2fs mit den Trägerschwingungen 2 $\cos\omega\nu kT$ bzw. 2 $\sin\omega\nu kT$ gespeist. Das Ausgangssignal des ersten Multiplizierers wird gefiltert, und zwar erfindungsgemäß in einem zeitdiskreten Filter Zf$\nu$, das als transversales oder rekursives Filter ausgeführt sein kann. Da dem Filter von dem ersten Multiplizierer zeitdiskrete Werte im Takte der doppelten Abtastrate 2fs angeboten werden, muß auch die interne Arbeitstaktrate den gleichen Wert Aufweisen. Ferner sind die Verzögerungsglieder dieses im 2er-Multiplex ausgenutzten zeitdiskreten Filters durch eine Kettenschaltung zweier Verzögerungsglieder realisiert, welche die zu verarbeitenden Signalwerte jeweils T/2 lang speichern. Der Ausgang des zeitdiskreten Filters ist auf einen Eingang der Verwürfelungsmatrix VMa geschaltet. Die Matrixausgänge sind jeweils auf einen zweiten Multiplizierer M$\nu$2 geführt, der

2

**0 065 648**

syndrom mit dem ersten zwischen den beiden orthogonalen Trägerschwingungen umgeschaltet wird. Ausgangsseitig sind die zweiten Multiplizierer der n Weaver-Modulatoren zusammengefaßt und einem Summierglied A zugeführt, in dem die Multiplexsignalwertepaare jeweils für eine Periode des Abtasttaktes akkumuliert werden. Durch die Abtastung der akkumulierten Werte mit der Abtastrate fs erhält man das zeitdiskrete Ausgangssignal mit dem Spektrum Y(f).

In Fig. 3 ist ein Realisierungsbeispiel für eine zeitdiskrete Multiplizieranordnung wiedergegeben, bei dem lediglich mit 3 Betragswerten, nämlich 0,268 ; 0,732 und 1 das Eingangssignal x(kT) bzw. x(kT/2) multipliziert zu werden braucht. Durch Anschalten dieser drei Werte mit positivem und negativem Vorzeichen mittels einer Ansteuerlogikschaltung, z. B. in der Reihenfolge 0,268 ; 0,732 ; 1 ; 0,732 ; 0,268 usw. für eine Sinusträgerschwingung wird die abgetastate Trägerschwingung für das Frequenzverhältnis $fv/fs = 1/12$ erzeugt.

Durch die Realisierung und Multiplexausnutzung des Multiplizierers gemäß Fig. 3 ist die Übereinstimmung der Trägeramplituden sichergestellt. Allgemein ausgedrückt kann das Frequenzverhältnis $fv/fs$ als das Verhältnis von zwei natürlichen Zahlen $lv/mv$ festgelegt werden, wobei $v = 1$ bis n sein kann, mit n als der Zahl der Teilbänder. Insbesondere können $lv = v$ und $m = \varepsilon \{2, 3, 4, 5, 6, 8, 10, 12\}$ gesetzt werden. Als Sonderfall wird $mv = m$ für alle $v$ mit $m \geqslant 2$ n gewählt.

Durch die Verwendung redundanter Verzögerungsglieder, gekoppelt mit einer weiteren Erhöhung der filterinternen Taktfrequenz, beispielsweise um Faktor 2, läßt sich vorteilhafterweise ein Nebensprechen zwischen den Quadraturkanälen weitgehend unterbinden, das durch parasitäre Effekte bei der Ladungsverschiebung in der Größenordnung der Transfereinffizienz $\varepsilon$ von ungefähr $10^{-3}$ bis $10^{-5}$ auftritt.


## Patentansprüche

1. Zeitdiskretes Verfahren zur Frequenzumsetzung und -vertauschung von n Teilbändern der Breite B eines mit der Abtastfrequenz fs = 1/T abgetasteten Signalfrequenzbandes der Breite n · B jeweils mit einer Sinus- und der dazu orthogonalen Cosinusträgerschwingung, nach der Weaver-Methode, mittels n Weaver-Modulatoren, jeweils bestehend aus zwei ersten Multiplizierern, denen gleiche Filter nachgeschaltet sind, und zwei zweiten Multiplizierern, die ausgangsseitig über ein Summierglied zusammengeschaltet sind, sowie einer Verwürfelungsmatrix zwischen den Filtern und den Zweiten Multiplizierern, dadurch gekennzeichnet, daß in den Weaver-Modulatoren die Filter in den zueinander orthogonalen Zweigen durch Multiplexbetrieb eines einzigen Filters (ZFv) und die zwei ersten und die zwei zweiten Multiplizierer durch Multiplexbetrieb jeweils eines einzigen Multiplizierers (Mv1, Mv2), dem im Takte der doppelten Abtastfrequenz 2 fs abwechselnd die Sinus- und die zu ihr orthogonale Cosinusträgerschwingung 2 sinωvkT bzw. 2 cosωvkT zugeführt werden, wobei k die laufende Nummer des Abtastzeitpunktes ist, realisiert werden, und daß die Verhältnisse der Trägerfrequenzen zur Abtastfrequenz festgelegt werden durch

$$\omega v/2\pi fs = fv/fs = lv/mv \leqslant 1/2$$

mit $lv$, $mv$ als natürliche (positive, ganze) Zahlen, wobei $v = 1$ bis n ist.

2. Verfahren nach Anspruch 1, gekennzeichnet durch $mv\varepsilon\{2, 3, 4, 5, 6, 8, 10, 12\}$.

3. Verfahren nach Anspruch 1 oder 2, dadurch gekennzeichnet, daß $lv = v$ gesetzt wird.

4. Verfahren nach Anspruch 1, dadurch gekennzeichnet, daß $mv = m$ für alle $v$ gesetzt und daß $m \geqslant 2$ n gewählt wird.

5. Verfahren nach einem der vorhergehenden Ansprüche, dadurch gekennzeichnet, daß die Sinus- und die dazu orthogonalen Cosinusträgerschwingungen sinωvkT bzw. cosωvkT durch einen abtastbaren Festwertegeber erzeugt werden (Fig. 3).

6. Verfahren nach Anspruch 5, dadurch gekennzeichnet, daß der Festwertegeber mittels auf feste Werte eingestellte Bewertungsschaltungen realisiert wird, wobei das Eingangssignal (x(kt) bzw. x(kT/2)) über eine dieser ausgewählten Bewertungsschaltungen geführt wird (Fig. 3).

7. Verfahren nach einem der vorhergehenden Ansprüche, dadurch gekennzeichnet, daß der Multiplexbetrieb der Filter (ZFv) durch die jeweilige Auftrennung der Verzögerungsglieder der Verzögerungszeit T in zwei hintereinander geschaltete Verzögerungsglieder der Verzögerungszeit T/2 bei der doppelten Abtastrate 2 fs = 2/T realisiert wird (Fig. 2).


## Claims

1. Method for the translation and interchange, discretely in time, of the frequencies of n partial bands of the width B of a signal frequency band of the width n · B scanned at a scanning frequency fs = 1/T each time by a sine carrier oscillation and by the cosine carrier oscillation orthogonal thereto, according to the Weaver method and by means of n Weaver modulators each respectively consisting of two first multipliers, behind which are connected like filters, and two second multipliers, which are connected

3

together at the output side by way of a summating member, as well as a scrambling matrix between the filters and the second multipliers, characterised thereby, that in the Weaver modulators, the filters in the mutually orthogonal branches are realised through multiplex operation of single filter (ZFν) and the two first and the two second multipliers are realised through multiplex operation of a respective single multiplier (Mν1, Mν2), to which the sine carrier oscillation and the cosine carrier oscillation orthogonal thereto (2 sinωνkT or 2 cosωνkT) are fed alternately at the rate of twice the scanning frequency 2 fs, wherein k is the consecutive number of the scanning instant, and that the ratios of the carrier frequencies to the scanning frequency are determined by

$$\omega\nu/2\pi fs = f\nu/fs = l\nu/m\nu \leqslant 1/2,$$

with lν and mν as natural (positive whole) numbers, wherein $\nu = 1$ to n.

2. Method according to claim 1, characterised by mνε{2, 3, 4, 5, 6, 8, 10, 12}.

3. Method according to claim 1 or 2, characterised thereby, that lν is set equal to ν.

4. Method according to claim 1, characterised thereby, that mν is set equal to m for any ν and that m is chosen to be at least equal to 2 n.

5. Method according to one of the preceding claims, characterised thereby, that the sine carrier oscillation and the cosine carrier oscillation orthogonal thereto (sinωνkT or cosωνkT) are generated by a scannable generator of fixed values (Fig. 3).

6. Method according to claim 5, characterised thereby, that the generator of fixed values is realised by means of weighting circuits set to fixed values, wherein the input signal (x(kT) or x(kT/2)) is conducted by way of one of these selected weighting circuits (Fig. 3).

7. Method according to one of the preceding claims, characterised thereby, that the multiplex operation of the filters (ZFν) is realised through the respective splitting-up of the delay members of the delay time T into two cascade-connected delay members of the delay time t/2 at twice the scanning rate 2.fs = 2/T (Fig. 2).

## Revendications

1. Procédé temporel discret de conversion et permutation en fréquence de n bandes partielles de largeur B d'une bande de fréquence de signal échantillonnée à la fréquence fs = 1/T et de largeur n · B, à l'aide d'une oscillation porteuse sinusoïdale et d'une oscillation porteuse cosinusoïdale orthogonale à la précédente, selon la méthode de Weaver, à l'aide de n modulateurs de Weaver constitués chacun par deux premiers multiplicateurs, en aval desquels sont branchés des filtres identiques, et deux seconds multiplicateurs, dont les sorties sont réunies par un sommateur, et une matrice d'embrouillage entre les filtres et les seconds multiplicateurs, ledit procédé étant caractérisé en ce que dans les modulateurs de Weaver, les filtres des branches orthogonales sont réalisés par multiplexage d'un filtre unique (ZFν), et les deux premiers et les deux seconds multiplicateurs sont réalisés par multiplexage d'un seul multiplicateur (Mν1, Mν2), auquel l'oscillation porteuse sinusoïdale 2 sinωνkT ou 2 cosωνkT orthogonale à la précédente sont appliquées alternativement à une cadence 2 fs double de la fréquence d'échantillonnage, k étant le numéro de l'instant d'échantillonnage ; et les rapports des fréquences porteuses à la fréquence d'échantillonnage sont déterminés par :

$$\omega\nu/2\pi fs = f\nu/fs = l\nu/m\nu \leqslant 1/2$$

lν, mν étant des nombres naturels (positifs, entiers) et $\nu = 1$ à n.

2. Procédé selon revendication 1, caractérisé par :

$$m\nu\varepsilon\{2, 3, 4, 5, 6, 8, 10, 12\}.$$

3. Procédé selon une des revendications 1 ou 2, caractérisé par lν = ν.

4. Procédé selon revendication 1, caractérisé en ce que mν = m pour tous les ν et que m ⩾ 2 n.

5. Procédé selon une quelconque des revendications 1 à 4, caractérisé en ce que l'oscillation porteuse sinusoïdale sinωνkT et l'oscillation porteuse cosinusoïdale cosωνkT, orthogonale à la précédente, sont générées par un générateur de valeurs fixes échantillonnable.

6. Procédé selon revendication 5, caractérisé en ce que le générateur de valeurs fixes est réalisé à l'aide de circuits de pondération ajustés à des valeurs fixes, le signal d'entrée (x(kT) ou x(kT/2)) étant dirigé dans un de ces circuits de pondération sélecté.

7. Procédé selon une quelconque des revendications 1 à 6, caractérisé en ce que le multiplexage des filtres (ZFν) est réalisé par la division des lignes de retard T en deux lignes de retard T/2 en série, avec une fréquence d'échantillonnage double 2 fs = 2/T.

FIG.1

0 065 648

FIG. 2

FIG. 3